# FASCICULE DE BREVET EUROPEEN

(11) **EP 3 880 517 B1**
(45) Date de publication et mention de la délivrance du brevet: **27.12.2023**
(21) Numéro de dépôt: 19829267.4
(22) Date de dépôt: 04.11.2019
(51) Int. Cl.: B60Q 5/00, G10K 11/00

(54) **SUPPORT DE MONTAGE D'UN DISPOSITIF D'ALARME SONORE D'UN AVAS SUR LA CAISSE D'UN VÉHICULE AUTOMOBILE SILENCIEUX**
HALTERUNG ZUR MONTAGE EINER GERÄUSCHALARMVORRICHTUNG EINES AVAS AN DER KAROSSERIE EINES LEISEN KRAFTFAHRZEUGS
SUPPORT FOR MOUNTING A SOUND ALARM DEVICE OF AN AVAS ON THE BODY OF A QUIET MOTOR VEHICLE

(30) Priorité: 15.11.2018 FR 1871531
(43) Date de publication de la demande: 22.09.2021
(73) Titulaire: Stellantis Auto SAS, 78300 Poissy (FR)
(72) Inventeur: SFAIHI, Sara, CASABLANCA, 20270 (MA); EL AKRAA, Mohamed Chafik, CASABLANCA, 20270 (MA)
(86) Numéro de dépôt international: PCT/FR2019/052600
(87) Numéro de publication internationale: WO 2020/099759

(56) Documents cités:
- EP-A2- 2 565 079
- US-A1- 2015 221 295
- US-A1- 2017 106 787
- Anonymous: "Lowrance TotalScan Skimmer Transom Mount Transducer 000-12568-001", , 17 septembre 2016 (2016-09-17), XP055621371, Extrait de l'Internet: URL:https://www.ebay.com/itm/Lowrance-Tota lScan-Skimmer-Transom-Mount-Transducer-000 -12568-001/252410455685?epid=28030524214&_ trkparms=ispr%3D1&hash=item3ac4d5e685:g:6L 4AAOSwLwBaei1W&enc=AQAEAAACABPxNw%2BVj6nta 7CKEs3N0qU6HwOba%2BO4uTaZx7Q3H83kGLoNMW2hs HjP7LQnYJZzbsUCmqIviDnt%2FAu [extrait le 2019-09-11]

## Description

### Domaine technique de l'invention

La présente invention revendique la priorité de la demande française 1871531 déposée le 15 Novembre 2018.

La présente invention relève du domaine des systèmes générateurs d'un signal d'alarme sonore équipant les véhicules automobiles silencieux, pour alerter les usagers des voies de circulation de l'approche du véhicule. Il est compris ici par véhicule automobile silencieux un véhicule automobile équipé d'une motorisation silencieuse de propulsion du véhicule, notamment une motorisation de propulsion du véhicule au moins en partie à énergie électrique.

L'invention concerne plus spécifiquement un support de montage sur la caisse d'un véhicule automobile silencieux, d'un dispositif émetteur d'un signal sonore participant d'un système d'alerte acoustique signalant l'approche d'un véhicule silencieux, communément désigné par AVAS.

### Art antérieur

Dans le domaine automobile, l'utilisation de véhicules équipés d'une motorisation de propulsion au moins partiellement électrique est devenu courant. De tels véhicules sont susceptibles d'être équipés d'une motorisation de propulsion du véhicule exclusivement à énergie électrique ou d'être des véhicules hybrides équipés d'une motorisation de propulsion à énergie électrique et d'une motorisation de propulsion à combustion. Les véhicules à motorisation de propulsion électrique sont des véhicules silencieux, qui présentent notamment les avantages de réduire les émissions de particules polluantes dans l'air et de réduire les nuisances sonores en étant silencieux lors de leur progression.

Cependant il a été constaté à l'usage que le caractère silencieux des véhicules automobiles à motorisation de propulsion électrique, pouvait être une source de danger pour les autres usagers des voies de circulation, notamment pour les piétons et/ou pour les cyclistes.

C'est pourquoi il a été développé des systèmes d'alerte acoustique permettant de signaler l'approche d'un véhicule automobile silencieux aux usagers des voies de circulation. De tels systèmes d'alerte acoustique sont communément désignés par AVAS, d'après l'acronyme en langue anglaise de Acoustic Vehicle Alerting Systems. Les AVAS comprennent un dispositif d'alarme sonore émetteur d'un signal acoustique qui est monté sur la caisse d'un véhicule automobile silencieux, notamment à l'avant du véhicule, tel qu'il ressort par exemple du document KR20160003500 A (HYUNDAI MOBIS CO Ltd), ainsi que les documents US 2017/106787 A1, US 2015/221295 A1 et EP 2 565 079 A2.

Cependant les dispositifs d'alarme sonore mis en oeuvre par les AVAS peuvent être une source de nuisances sonores pour les passagers du véhicule. En effet, les dispositifs d'alarme sonore d'un AVAS sont générateurs de vibrations qui sont transmises à la caisse du véhicule en étant alors perceptibles par les passagers du véhicule.

### Résumé de l'invention

Dans ce contexte, la présente invention a pour objet un support de montage d'un dispositif d'alarme sonore d'un AVAS sur la caisse d'un véhicule automobile silencieux.

Un but de l'invention est de proposer un tel support dont l'architecture et/ou les aménagements permettent de limiter la transmission de vibrations générées par le dispositif d'alarme sonore à la caisse du véhicule, pour finalement préserver les passagers du véhicule des nuisances sonores qui en résultent.

Un autre but de l'invention est de proposer un tel support dont la structure soit peu encombrante pour autoriser son implantation dans un environnement fréquemment encombré du véhicule, notamment à l'avant du véhicule.

Un autre but de l'invention est de proposer un tel support intrinsèquement robuste qui soit structurellement simple pour en réduire le coût d'obtention, en évitant notamment l'utilisation de moyens spécifiques amortisseurs de vibrations de par l'architecture intrinsèque du support.

Un autre but de l'invention est de proposer un tel support dont l'architecture ne fasse pas obstacle à son installation aisée sur le véhicule par un opérateur, afin de limiter les coûts induits par le montage du dispositif d'alarme sonore sur la caisse du véhicule.

Il est à relever que les buts de l'invention s'inscrivent sous contrainte d'une recherche de réduction des coûts liés à l'obtention du support et à son installation sur le châssis du véhicule, dans le contexte d'une concurrence économique notoirement sévère dans le domaine automobile qui peut rendre rédhibitoire une solution potentielle en raison des coûts induits.

Les buts visés par la présente invention sont atteints par application des dispositions qui suivent.

Le support de l'invention est un support de montage d'un dispositif d'alarme sonore d'un AVAS sur la caisse d'un véhicule automobile silencieux selon la revendication 1. Les revendications dépendantes définissent des formes de réalisation avantageuses.

Il est notamment pris en considération la zone encombrée du véhicule recevant le dispositif d'alarme sonore, contraignant une limitation de l'épaisseur de la première tôle constitutive de la platine. A titre indicatif, l'épaisseur de la première tôle est comprise entre 1 mm (un millimètre) et 3 mm, en étant plus spécifiquement de l'ordre de 2 mm.

L'invention a aussi pour objet un véhicule automobile équipé d'une motorisation de propulsion silencieuse et d'un AVAS comprenant un dispositif d'alarme sonore monté sur la caisse du véhicule via un support. Selon l'invention, ledit véhicule est reconnaissable en ce que ledit support est conforme à l'invention.

Selon une forme de réalisation, le support est fixé à la caisse via ladite au moins une patte de fixation, en étant placé en contrebas d'un projecteur équipant le véhicule, notamment un projecteur avant gauche. Par exemple, la première patte de fixation est fixée à un élément de carrosserie ménageant un passage de roue avant du véhicule et la deuxième patte de fixation est fixée à un élément de façade avant du véhicule.

### Brève description des figures

L'invention sera mieux comprise à la lecture de la description détaillée qui suit d'un exemple de réalisation de la présente invention, en relation avec les figures suivantes :
[Fig. 1] La figure 1 est une illustration en perspective d'un dispositif d'alarme sonore d'un AVAS monté sur la caisse d'un véhicule automobile relevant de l'invention, via un support conforme à l'invention.
[Fig. 2] La figure 2 est une illustration en perspective du support représenté sur la figure 1.
[Fig. 3] La figure 3 est une illustration en perspective du support représenté sur les figures 1 et 2, sur lequel support le dispositif d'alarme sonore est fixé.

### Description détaillée de l'invention

Les figures et leurs descriptions détaillées non limitatives, exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

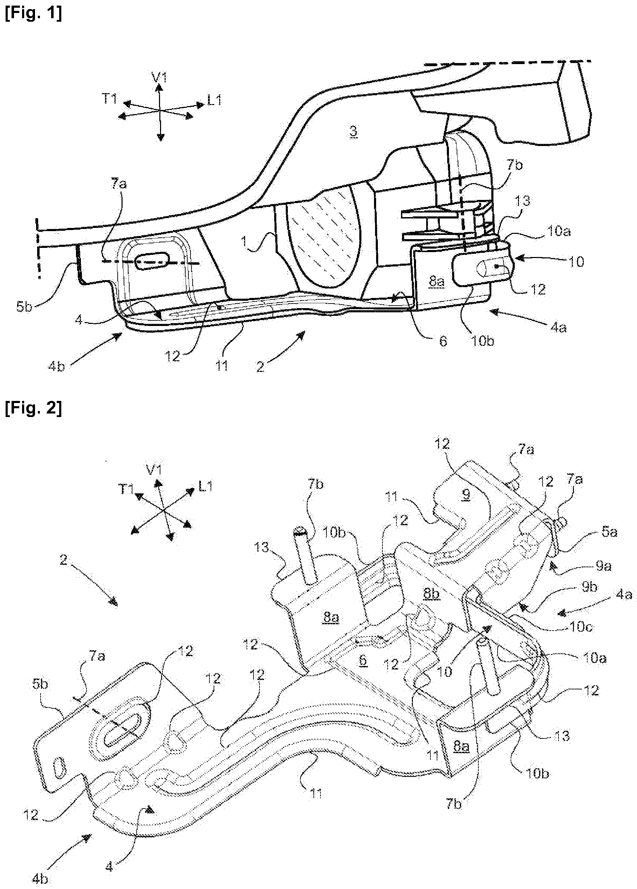

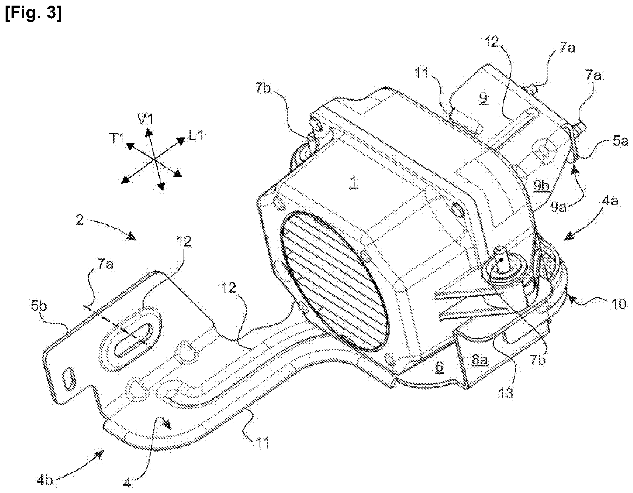

Sur la figure 1, un dispositif d'alarme sonore 1 d'un AVAS est monté sur la caisse d'un véhicule automobile via un support 2. Les particularités du support 2 et les modalités d'installation du dispositif d'alarme sonore 1 sur le support 2, sont plus particulièrement visibles respectivement sur la figure 2 et sur la figure 3. Selon l'exemple illustré, le dispositif d'alarme sonore 1 est installé sur la caisse en contrebas d'un projecteur 3 par rapport au plan de roulage du véhicule. Le support 2 est organisé pour conforter sa robustesse intrinsèque et son immobilisation en position sur la caisse, en filtrant les vibrations générées par le dispositif d'alarme sonore 1 auxquelles le support 2 est soumis. Ceci permet finalement de limiter une transmission desdites vibrations depuis le support vers la caisse et ainsi éviter la génération de nuisances sonores perceptibles par les passagers du véhicule.

Le support 2 intègre divers composants formés à partir d'une première tôle qui est mise en forme par emboutissage et/ou par pliage. Le maintien en conformation du support 2 et/ou sa faculté à filtrer les dites vibrations sont confortés par une armature 10, 10c équipant le support 2 et par des organes de renfort 11, 12 intégrés au support 2 par façonnage de tôles constitutives du support 2.

Plus particulièrement visible sur la figure 2, le support 2 comprend une platine 4 qui s'étend longitudinalement L1 et transversalement T1 suivant son plan d'extension. La platine 4 est issue de la première tôle et est globalement conformée en équerre suivant son plan d'extension. Une première branche de l'équerre s'étend transversalement T1 suivant le plan de la platine 4 en ménageant, à une première des extrémités longitudinales 4a, un socle 6 contre lequel le dispositif d'alarme sonore 1 est plaqué verticalement V1 comme illustré sur la figure 3. Une deuxième branche de l'équerre s'étend en prolongement longitudinal L1 du socle 6 à l'une de ses extrémités transversale T1 prévue d'être orientée vers la caisse du véhicule, sur laquelle le support 2 est fixé via une patte de fixation 5b ménagée à la deuxième extrémité longitudinale 4b de la platine 4.

La platine 4 est munie de deux pattes de fixation 5a, 5b du support 2 sur la caisse du véhicule, qui sont formées par pliage de la première tôle en s'étendant suivant un plan vertical V1 perpendiculairement au plan de la platine 4. Une première patte de fixation 5a est ménagée à une première extrémité longitudinale du support 2, en étant orientée transversalement T1 en débordement longitudinal L1 du socle 6 vers l'extérieur du support 2. Une deuxième patte de fixation 5b s'étend longitudinalement L1 en étant ménagée le long d'un bord longitudinal L1 de la platine 4 s'étendant à la deuxième de ses extrémités longitudinales 4b.

Le support 2 est ainsi fixé à la caisse à chacune de ses extrémités longitudinales via les pattes de fixation 5a, 5b, notamment par boulonnage au moyen de premiers organes de fixation 7a. La fixation du support 2 à la caisse est notamment réalisée transversalement T1 via la première patte de fixation 5a et longitudinalement L1 conjointement via les deux pattes de fixation 5a, 5b.

Le support 2 est muni d'ailes 8a, 8b qui sont intégrées à la platine 4 en étant formées par pliage de la première tôle et en s'étendant verticalement V1 perpendiculairement au plan du socle 6. Les ailes 8a, 8b délimitent entre elles un logement de réception du dispositif d'alarme sonore 1 comme représenté sur la figure 3. Des ailes longitudinales 8a sont ménagées en vis-à-vis respectivement à l'un et l'autre des bords longitudinaux transversalement T1 opposés du socle 6. Une aile transversale 8b est ménagée au bord transversal T1 de la première extrémité longitudinale 4a de la platine 4.

L'aile transversale 8b comporte un retour 9 orienté vers l'extérieur du socle 6 en s'étendant longitudinalement L1 en débord de la platine 4 parallèlement à son plan d'extension. Le retour 9 de l'aile transversale 8b comporte un premier rabat 9a constitutif de ladite première patte de fixation 5a, qui s'étend transversalement T1 et verticalement V1 en surplombant le plan géométrique d'extension de la platine 4. Le retour 9 de l'aile transversale 8b comporte aussi un deuxième rabat 9b qui s'étend longitudinalement L1 et verticalement V1 en surplombant le plan géométrique d'extension de la platine 4.

Le dispositif d'alarme sonore 1 est fixé par boulonnage sur le support 2, notamment par boulonnage via des deuxièmes organes de fixation 7b. Selon l'exemple de réalisation illustré, les deuxièmes organes de fixation peuvent être agencés en goujons intégrés au support 2. A cet effet, les ailes longitudinales 8a comportent chacune un rabat 13 à leur bord s'étendant en surplomb du plan d'extension de la platine 4. Les rabats 13 des ailes longitudinales 8a sont orientés transversalement vers l'extérieur du support 2, en s'étendant sensiblement parallèlement et en surplomb du plan géométrique d'extension de la platine 4.

Les rabats 13 des ailes longitudinales 8a sont munis des deuxièmes organes de fixation 7b, qui sont de préférence intégrés par soudage au support 2 et plus particulièrement à chacun des rabats 13 que comportent les ailes 8a longitudinales.

Une telle configuration des modalités de fixation du dispositif d'alarme sonore 1 sur le support 2 favorise son plaquage ferme contre le socle 6 et facilite l'opération de fixation du dispositif d'alarme sonore 1 sur le support 2.

Le support est muni d'une armature confortant l'obtention d'un maintien ferme sur le support 2 du dispositif d'alarme sonore 1. L'armature participe à l'immobilisation du dispositif d'alarme sonore 1 sur le support 2 en contrant les vibrations qu'il génère en fonctionnement, et participe au maintien en conformation du support 2 pour limiter l'impact sur le support 2 des vibrations générées par le dispositif d'alarme sonore 1.

L'armature comprend une ceinture 10 qui est issue d'une deuxième tôle façonnée, par pliage et/ou emboutissage. La ceinture 10 relie successivement entre-elles les dites ailes 8a, 8b auxquelles la ceinture 10 est fixée par soudage. La ceinture 10 s'étend verticalement V1 perpendiculairement au plan du socle 6 et comprend une partie médiane 10a qui s'étend transversalement T1 au bord transversal du socle 6 orienté vers l'extérieur de la platine 4. La partie médiane 10a de la ceinture 10 comporte à chacune de ses extrémités des retours 10b d'extension longitudinale L1. La partie médiane 10a de la ceinture 10 est fixée à l'aile transversale 8b suivant son plan d'extension. Les retours 10b constitutifs de la ceinture 10, ménagés en bordure des extrémités de sa partie médiane 10a, sont respectivement fixés aux ailes longitudinales 8a.

L'armature comprend aussi une patte de jonction 10c qui est issue d'une troisième tôle façonnée par pliage et/ou par emboutissage. La patte de jonction 10c est soudée d'une part à la partie médiane 10a de la ceinture10 et d'autre part au deuxième rabat 9b que comporte le retour 9 de l'aile transversale 8b.

Les organes de renfort du support 2 comprennent des bords tombés 11 qui sont ménagés au moins en partie aux bords dégagés de la platine 4 et/ou aux bords dégagés du retour 9 que comporte l'aile transversale 8b. La notion "dégagé" affectée aux dits bords dégagés est comprise comme une absence de liaison entre lesdits bords dégagés et un ou plusieurs autres éléments constitutifs du support 2. Lesdits organes de renfort du support 2 comprennent encore des nervures 12 formées par emboutissage au moins sur la platine 4, et/ou sur la deuxième patte de fixation 5b, et/ou sur la ceinture 10 et/ou encore sur le retour 9 de l'aile transversale 8b.

L'invention permet significativement de limiter une transmission des vibrations générées par le dispositif d'alarme sonore 1 à la caisse via le support 2, afin d'éviter des nuisances sonores pour les passagers du véhicule susceptibles d'être générées par lesdites vibrations. L'organisation structurelle du support 2 permet de palier à l'inconvénient de telles nuisances sonores à moindres coûts et/ou en tenant compte des contraintes liées à l'environnement encombré de la zone d'implantation du dispositif d'alarme sonore 1 sur la caisse du véhicule.

Le support 2 est intrinsèquement organisé en un élément monobloc formant un organe de filtration des dites vibrations, et cela en tenant compte de la formation de la platine 4 à partir de la première tôle qui est de faible épaisseur, de l'ordre de deux millimètres, et en évitant l'apport de moyens à déformation élastique classiquement utilisés pour filtrer des vibrations. Il est évité une complexification structurelle coûteuse et/ou un accroissement de l'encombrement du support 2 rédhibitoires, et/ou une installation du dispositif d'alarme sonore 1 sur la caisse du véhicule qui serait délicate à effectuer par un opérateur compte tenu de l'environnement encombré de la zone d'implantation du dispositif d'alarme sonore 1 sur la caisse du véhicule.

## Revendications

1. Support (2) de montage d'un dispositif d'alarme sonore (1) d'un système d'alerte acoustique signalant l'approche d'un véhicule silencieux (AVAS) sur la caisse d'un véhicule automobile silencieux, le support (2) comprenant une platine (4) s'étendant longitudinalement (L1) et transversalement (T1) dans son plan d'extension, la platine (4) ménageant dans son plan un socle (6) de réception du dispositif d'alarme sonore (1) et étant munie d'au moins une patte de fixation (5a, 5b) du support (2) sur la caisse du véhicule qui s'étend verticalement (V1) perpendiculairement au plan de la platine (4), le socle (6) s'étendant à une première des extrémités longitudinales (4a) de la platine (4) et est pourvu d'une première dite patte de fixation (5a) d'extension verticale (V1) et transversale (T1) qui est disposée en débord longitudinal (L1) du socle (6), une deuxième dite patte de fixation (5b) d'extension verticale (V1) et longitudinale (L1) étant ménagée à l'autre deuxième extrémité longitudinale (4b) de la platine (4) en étant disposée à distance longitudinale (L1) du socle (6), le socle (6) étant bordé par des ailes (8a, 8b) s'étendant verticalement (V1) perpendiculairement au plan de la platine (4), lesdites ailes (8a, 8b) délimitant un logement de réception du dispositif d'alarme sonore (1) sur le socle (6) et comprenant au moins deux ailes longitudinales (8a) ménagées en vis-à-vis respectivement à l'un et l'autre des bords longitudinaux transversalement (T1) opposés du socle (6), et au moins une aile transversale (8b) ménagée au bord transversal de la première extrémité longitudinale (4a) de la platine (4), le support étant **caractérisé en ce que** ladite aile transversale (8b) comporte, à l'un de ses bords transversaux s'étendant en surplomb du socle (6), un retour (9) orienté vers l'extérieur du socle (6) sensiblement parallèlement au plan d'extension de la platine (4), ledit retour (9) étant lui-même prolongé à son extrémité longitudinale débordant du socle (6) par la première patte de fixation (5a).

2. Support (2) selon la revendication 1, **caractérisé en ce que** la platine (4) est configurée en équerre dans son plan d'extension, une première branche de l'équerre ménageant le socle (6) et une deuxième branche de l'équerre s'étendant en prolongement longitudinal (L1) d'une extrémité transversale (T1) du socle (6), en formant un bras de soutien du socle (6) qui est muni de ladite au moins une patte de fixation (5b).

3. Support (2) selon la revendication 1, **caractérisé en ce que** le support (2) est muni d'une armature (10, 10c) comprenant une ceinture (10) s'étendant verticalement (V1) perpendiculairement au plan de la platine (4), ladite ceinture (10) reliant entre elles au moins les ailes longitudinales (8a) et ladite au moins une aile transversale (8b).

4. Support (2) selon les revendications 1 et 3, **caractérisé en ce que** l'armature comprend une patte de jonction (10c) d'extension verticale (V1) reliant la ceinture (10) à un rabat (9b) du retour (9) de l'aile transversale (8b) qui s'étend verticalement (V1) et transversalement (T1).

5. Support (2) selon les revendications 1 à 4 , **caractérisé** :
**en ce que** le support (2) est monobloc en comprenant une pluralité de composants, et des organes de renfort,
**en ce que** lesdits composants du support (2) sont conjointement formés par façonnage d'une première tôle et comprennent l'ensemble formé au moins de la platine (4), de ladite au moins une patte de fixation (5a, 5b) et des dites ailes (8a, 8b),
**en ce que** l'armature comprend :
-) ladite ceinture (10) qui est formée par façonnage d'une deuxième tôle et qui est intégrée au support (2) par soudage au moins sur les dites ailes (8a, 8b),
-) ladite patte de jonction (10c) qui est formée par façonnage d'une troisième tôle et qui est soudée transversalement (T1) sur la ceinture (10) et longitudinalement (L1) au dit rabat (9b) du retour (9) de l'aile transversale (8b), et
**en ce que** lesdits organes de renfort comprennent :
-) des raidisseurs comprenant au moins des nervures (12) et des bords tombés (11) qui sont intégrés au support (2) par déformation de matière et qui sont répartis sur la platine (4), sur l'une au moins des pattes de fixation (5a, 5b), sur la ceinture (10) et sur l'une au moins des dites ailes (8a, 8b), dont sur le retour (9) et/ou sur le rabat (9b) que comporte le retour (9) dont est munie l'aile transversale (8b).

6. Véhicule automobile équipé d'une motorisation de propulsion silencieuse et d'un AVAS comprenant un dispositif d'alarme sonore (1) monté sur la caisse du véhicule via un support (2), **caractérisée en ce que** ledit support (2) est conforme à l'une quelconque au moins des revendications 1 à 5.

7. Véhicule automobile selon la revendication 6, **caractérisé en ce que** le support (2) est fixé à la caisse via ladite au moins une patte de fixation (5a, 5b), en étant placé en contrebas d'un projecteur (3) équipant le véhicule.

## Patentansprüche

1. - Halterung (2) zur Montage einer akustischen Alarmvorrichtung (1) eines akustischen Alarmsystems, das die Annäherung eines geräuschlosen Fahrzeugs (AVAS) an den Wagenkasten eines geräuschlosen Kraftfahrzeugs signalisiert, wobei die Halterung (2) eine sich in ihrer Ausdehnungsebene in Längsrichtung (L1) und quer (T1) erstreckende Platine (4) aufweist, wobei die Platine (4) in ihrer Ebene einen Sockel (6) zur Aufnahme der akustischen Alarmvorrichtung (1) bildet und mit mindestens einer Befestigungslasche (5a, 5b) der Halterung (2) an dem Wagenkasten des Fahrzeugs versehen ist sich vertikal (V1) senkrecht zur Ebene der Platine (4) erstreckt, wobei sich der Sockel (6) an einem ersten der Längsenden (4a) der Platine (4) erstreckt und mit einer ersten Befestigungslasche (5a) mit vertikaler (V1) und transversaler (T1) Ausdehnung versehen ist, die in einem Längsvorsprung (L1) des Sockels (6) angeordnet ist, wobei eine zweite Befestigungslasche (5b) mit vertikaler (V1) und longitudinaler (L1) Ausdehnung am anderen zweiten Längsende (4b) der Platine (4) in einem Abstand angeordnet ist Längsachse (L1) des Sockels (6), wobei der Sockel (6) von Flügeln (8a, 8b) umgeben ist, die sich senkrecht zur Ebene der Platte (4) erstrecken, wobei die Flügel (8a, 8b) eine Aufnahme für die akustische Alarmanlage (1) auf dem Sockel (6) begrenzen und mindestens zwei Längsflügel (8a), die jeweils gegenüberliegend zu einem der gegenüberliegenden Längsränder (T1) des Sockels (6) ausgebildet sind, und mindestens einen Querflügel (8b) aufweisen am Querrand des ersten Längsendes (4a) der Platine (4), wobei der Träger **dadurch gekennzeichnet ist, dass** der Querrand (8b) an einem seiner Querränder, die sich über den Sockel (6) hinaus erstrecken, eine nach außen gerichtete Rückführung (9) des Sockels (6) aufweist, die im Wesentlichen parallel zur Erstreckungsebene der Platine (4) verläuft, wobei die Rückführung (9) selbst an ihrem Längsende, das vom Sockel (6) durch die erste Befestigungslasche (5a) vorsteht, verlängert ist.

2. - Halterung (2) nach Anspruch 1, **dadurch gekennzeichnet, dass** die Platte (4) in ihrer Erstreckungsebene winkelförmig ausgebildet ist, wobei ein erster Schenkel des Winkels den Sockel (6) ausbildet und ein zweiter Schenkel des Winkels sich in Längsverlängerung (L1) eines Querendes (T1) des Sockels (6) erstreckt, wobei er einen Stützarm des Sockels (6) bildet, der mit der wenigstens einen Befestigungslasche (5b) versehen ist.

3. - Halter (2) nach Anspruch 1, **dadurch gekennzeichnet, dass** der Halter (2) mit einem Anker (10, 10c) versehen ist, der einen sich senkrecht zur Ebene der Platte (4) erstreckenden Gürtel (10) aufweist, wobei der Gürtel (10) wenigstens die Längsschenkel (8a) und den wenigstens einen Querschenkel (8b) miteinander verbindet.

4. - Halter (2) nach den Ansprüchen 1 und 3, **dadurch gekennzeichnet, dass** der Anker eine Verbindungslasche (10c) mit vertikaler Ausdehnung (V1) umfasst, die den Gürtel (10) mit einer Klappe (9b) des Rücklaufs (9) des sich vertikal (V1) und transversal (T1) erstreckenden Querschenkels (8b) verbindet.

5. - Halterung (2) nach den Ansprüchen 1 bis 4, **gekennzeichnet durch**:
**dadurch gekennzeichnet, dass** der Träger (2) einstückig ist und eine Vielzahl von Komponenten und Verstärkungsglieder umfasst,
**dadurch gekennzeichnet, dass** die Komponenten des Trägers (2) durch Formen eines ersten Blechs zusammengefasst sind und die mindestens aus der Platine (4), der mindestens einen Befestigungslasche (5a, 5b) und den Flügeln (8a, 8b) gebildete Einheit umfassen,
soweit das Gerüst Folgendes umfasst:
-) der Gürtel (10) durch Verformen eines zweiten Bleches gebildet wird und durch Verschweißen zumindest an den Flügeln (8a, 8b) in den Träger (2) integriert ist,
-) der Verbindungslasche (10c), die durch Verformung eines dritten Bleches gebildet ist und die quer (T1) an den Gürtel (10) und längs (L1) an die Klappe (9b) der Rückführung (9) des Querschenkels (8b) angeschweißt ist, und
diese Verstärkungsorgane umfassen:
-) Versteifungen mit wenigstens Rippen (12) und Absenkkanten (11), die durch Materialverformung in den Träger (2) integriert sind und die auf der Platine (4), auf wenigstens einer der Befestigungslaschen (5a, 5b), auf dem Gurt (10) und auf wenigstens einem der genannten Flügel (8a, 8b) verteilt sind, darunter auf dem Rücksprung (9) und/oder auf der Klappe (9b), die der Rücksprung (9) aufweist, mit dem der Querflügel (8b) versehen ist.

6. - Kraftfahrzeug mit einem geräuschlosen Antriebsmotor und einem AVAS, das eine akustische Alarmvorrichtung (1) umfasst, die über einen Träger (2) am Wagenkasten des Fahrzeugs angebracht ist, **dadurch gekennzeichnet, dass** der Träger (2) mindestens einem der Ansprüche 1 bis 5 entspricht.

7. - Kraftfahrzeug nach Anspruch 6, **dadurch gekennzeichnet, dass** die Halterung (2) an der Karosserie über die wenigstens eine Befestigungslasche (5a, 5b) befestigt ist, wobei sie sich unterhalb eines Scheinwerfers (3) befindet, der das Fahrzeug ausstattet.

## Claims

1. Support (2) for mounting an audible alarm device (1) of an acoustic warning system signalling the approach of a silent vehicle (AVAS) to the body of a silent motor vehicle, the support (2) comprising a plate (4) extending longitudinally (L1) and transversely (T1) in its extension plane, the plate (4) providing in its plane a base (6) for receiving the audible alarm device (1) and being provided with at least one lug (5a, 5b) for fixing the support (2) to the body of the vehicle which extends vertically (V 1) perpendicular to the plane of the plate (4), the base (6) extending at a first of the longitudinal ends (4 a) of the plate (4) and is provided with a first said fixing lug (5 a) of vertical (V1) and transverse extension (T 1) which is arranged at a longitudinal overhang (L 1) of the base (6), a second said fixing lug (5 b) of vertical (V 1) and longitudinal extension (L 1) being arranged at the other second longitudinal end (4 b) of the plate (4) while being arranged at a longitudinal distance (L 1) from the base 6), the base (6) being bordered by wings (8a, 8b) extending vertically (V1) perpendicular to the plane of the plate (4), said wings (8a, 8b) delimiting a housing for receiving the audible alarm device (1) on the base (6) and comprising at least two longitudinal wings (8a) arranged facing respectively one and the other of the transverse longitudinal edges (T1) opposite the base (6), and at least one transverse wing (8b) arranged at the transverse edge of the first longitudinal end (4a) of the base (6). the plate (4), the support being **characterized in that** said transverse wing (8b) comprises, at one of its transverse edges extending overhanging the base (6), a return (9) oriented towards the outside of the base (6) substantially parallel to the plane of extension of the plate (4), said return (9) itself being extended at its longitudinal end projecting from the base (6) by the first fixing lug (5a).

2. Support (2) according to Claim 1, **characterized in that** the plate (4) is configured at right angles in its extension plane, a first branch of the right angle forming the base (6) and a second branch of the right angle extending longitudinally (L1) from a transverse end (T1) of the base (6), forming a support arm of the base (6) which is provided with the said at least one fixing lug (5b).

3. Support (2) according to claim 1, **characterized in that** the support (2) is provided with a frame (10, 10c) comprising a belt (10) extending vertically (V1) perpendicular to the plane of the plate (4), said belt (10) interconnecting at least the longitudinal wings (8a) and said at least one transverse wing (8b).

4. Support (2) according to claims 1 and 3, **characterized in that** the frame comprises a vertically extending junction lug (10c) (V1) connecting the belt (10) to a flap (9b) of the return (9) of the transverse wing (8b) which extends vertically (V1) and transversely (T1).

5. Support (2) according to claims 1 to 4, **characterized by**:
in that the support (2) is in one piece, comprising a plurality of components, and reinforcing members,
in that said components of the support (2) are jointly formed by shaping a first sheet and comprise the assembly formed at least of the plate (4), of said at least one fixing lug (5 a, 5 b) and of said wings (8 a, 8 b),
in that the reinforcement comprises:
said belt (10) which is formed by shaping a second sheet and which is integrated into the support (2) by welding at least on said wings (8 a, 8 b),
said joining lug (10 c) which is formed by shaping a third sheet and which is welded transversely (T 1) to the belt (10) and longitudinally (L 1) to said flap (9 b) of the return (9) of the transverse wing (8 b), and
in that the said reinforcing members comprise:
stiffeners comprising at least ribs (12) and flanged edges (11) which are integrated into the support (2) by deformation of material and which are distributed on the plate (4), on at least one of the fixing lugs (5 a, 5 b), on the belt (10) and on at least one of said wings (8 a, 8 b), including on the return (9) and/or on the flap (9 b) comprised in the return (9) with which the transverse wing (8 b) is provided.

6. Motor vehicle equipped with a silent propulsion motor and with an AVAS comprising an audible alarm device (1) mounted on the body of the vehicle via a support (2), **characterized in that** the said support (2) is in accordance with any one of Claims 1 to 5.

7. Motor vehicle according to claim 6, **characterized in that** the support (2) is fixed to the body via said at least one fixing lug (5a, 5b), being placed below a headlight (3) fitted to the vehicle.
